# EUROPÄISCHE PATENTSCHRIFT

(11) **EP 0 423 457 B1**
(45) Veröffentlichungstag und Bekanntmachung des Hinweises auf die Patenterteilung: **06.10.1993**
(21) Anmeldenummer: 90115859.2
(22) Anmeldetag: 18.08.1990
(51) Int. Cl.: A47J 19/02

(54) **Elektrisch angetriebene Zitruspresse**
Electrically operated citrus press
Presse-agrumes électrique

(30) Priorität: 16.09.1989 DE 3931016; 16.09.1989 DE 3931015
(43) Veröffentlichungstag der Anmeldung: 24.04.1991
(73) Patentinhaber: Braun Aktiengesellschaft, Frankfurt am Main (DE)
(72) Erfinder: Rebordosa Rius, Antonio, E-08240 Manresa (Barcelona) (ES); Ponce Lucas, Rafael, E-08015 Barcelona (ES); Cremades Blasco, Joce, E-08902 L'Hospitalet (Barcelona) (ES)

(56) Entgegenhaltungen:
- DE-A- 1 729 913
- DE-B- 1 259 030
- DE-C- 819 365
- DE-U- 8 908 774
- FR-A- 2 347 958
- US-A- 3 566 939

## Beschreibung

Die Erfindung betrifft eine Zitruspresse zur Herstellung von Fruchtsaft mit einem durch eine Antriebswelle motorisch angetriebenen Preßkegel, welcher rundum von einem mit Durchlässen versehenen Sieb umgeben ist, unter dem eine eine Innenwandung aufweisende Auffangschale für den Fruchtsaft angeordnet ist, wobei beim Auspressen einer Zitrusfrucht der Fruchtsaft die Durchlässe des Siebes passiert und das Fruchtfleisch weitgehend von den Durchlässen des Siebes zurückgehalten wird.

Derartige Zitruspressen werden bereits seit vielen Jahren im Handel angeboten, unter anderem auch bei der Fa. Braun Aktiengesellschaft, Kronberg, (siehe Programmübersicht Herbst 1988, Seite 35).

Des weiteren ist aus der DE-A 17 29 913 eine derartige Zitruspresse bekannt, bei der der ausgepreßte Saft durch einen zwischen dem Preßkegel und dem Rand der Auffangschale gebildeten Ringspalt hindurchtritt.

Bei diesen Zitruspressen ist es als weniger vorteilhaft anzusehen, daß durch die fest vorgegebene Größe der Siebdurchlässe bzw. des Ringspaltes sowohl die Größe der Fruchtfleischstücke als auch der Fruchtfleischanteil in der Auffangschale vorbestimmt ist, d.h., der Fruchtfleischanteil weist in Abhängigkeit der Schlitzgröße immer ein konstantes Verhältnis zum Saftanteil auf.

Aufgabe der Erfindung ist es daher, eine elektrisch angetriebene Zitruspresse zu schaffen, bei der der prozentuale Fruchtfleischanteil im Saft mit einfachen Mitteln vor oder während dem Auspressen von Früchten festgelegt werden kann.

Diese Aufgabe wird nach einer ersten Ausführungsform erfindungsgemäß dadurch gelöst, daß der Grenzbereich zwischen dem Preßkegel und dem Sieb als Ringspalt ausgebildet ist, daß der Ringspalt in seinem Querschnitt veränderbar ist, daß zum Zwecke der Querschnittsveränderung der Preßkegel und/oder das Sieb durch eine Höhenverstelleinrichtung gegeneinander höhenverstellbar sind und daß sich die Mantelfläche des Preßkegels und/oder des Siebes im Bereich der Querschnittsveränderung des Ringspaltes in radialer Richtung verändert. Durch diese erste Lösung nach der Erfindung wird der Vorteil erzielt, daß bei einer Zitruspresse der Anteil an Fruchtfleisch im Fruchtsaft vor oder während dem Auspreßvorgang festgelegt werden kann. Zum Zwecke der Querschnittsveränderung sind also der Preßkegel und/oder das Sieb durch eine Höhenverstelleinrichtung gegeneinander höhenverstellbar, wobei entweder das Sieb oder der Preßkegel oder beide Teile gegeneinander verstellbar sind, um den Querschnitt des Ringspaltes in seiner Größe zu verändern. Bei einem großen Ringspalt befinden sich also mehr oder sogar alle Tresteranteile und bei einem kleineren Ringspalt weniger oder fast gar keine Tresteranteile im Saft.

Die erste Ausführungsform der Zitruspresse nach der Erfindung läßt sich besonders einfach erreichen, wenn das Sieb in der Auffangschale gelagert ist und wenn die Höhenverstelleinrichtung zwischen dem Sieb und der Auffangschale ausgebildet ist.

Dabei hat es sich als vorteilhaft erwiesen, wenn die Höhenverstelleinrichtung zwischen dem Sieb und der Schale von einem selbsthemmenden Gewinde gebildet wird. Durch die geringe Verdrehung des Siebes gegenüber der Auffangschale oder umgekehrt verändert sich nämlich der Ringspalt in seiner Breite bzw. in seinem Durchlaßquerschnitt bereits ausreichend groß. Eine Positionssicherung beider Teile zueinander ist aufgrund des selbsthemmenden Gewindes nicht unbedingt nötig. Genauso ist es aber auch denkbar, ein nicht selbsthemmendes Gewinde zu wählen wobei das verstellbare Teil dann durch eine Rasteranordnung oder eine andere Festhalteeinrichtung in verschiedenen Höhenlagen zur Bildung eines sich in dieser Lage nicht verändernden Ringspaltes gehalten werden muß.

Es ist aber auch möglich, anstelle des Gewindes für die Höhenverstelleinrichtung mindestens drei am Umfang des Siebes oder der Auffangschale verteilte Vorsprünge zu wählen, die in am Umfang der Auffangschale oder des Siebes entsprechend verteilte Ausnehmungen einrastbar sind, wobei jeweils drei eine Gruppe bildende Ausnehmungen auf gleicher Höhe liegen, während weitere Gruppen von Ausnehmungen, die die gleiche Teilung wie die Vorsprünge haben, auf einer anderen Höhe an der Auffangschale oder am Sieb ausgebildet sind. Diese Ausführung hat gegenüber der Gewindeausführung zum einen den Vorteil, daß die Höhenverstelleinrichtung nicht stufenlos, sondern durch einzelne Raststellungen einstellbar ist und daß sie zum anderen wesentlich stabiler und kippfester ist. Die Rastverstellung hat für eine Bedienungsperson den Vorteil, daß sie den Ringspalt schrittweise in verschiedenen Stufen, ob grob, mittel oder fein, einstellen kann. Da der Preßkegel, das Sieb oder der Auffangbehälter aus Kunststoff hergestellte Teile sind, können an diesen Teilen sowohl die Vorsprünge wie die Ausnehmungen ohne Mehrkosten angeformt werden. Selbstverständlich ist es auch möglich, die Zapfen und die Ausnehmungen in äquivalenter Form an den Teilen so anzubringen, daß beispielsweise die Höhenverstelleinrichtung aus mindestens drei am Umfang des Siebes oder der Auffangschale verteilten Ausnehmungen besteht, in die am Umfang der Auffangsschale oder des Siebes entsprechend ausgebildete Vorsprünge einrastbar sind. Beide Ausführungsformen sind leicht realisierbar. Um eine möglichst stabile Lage des Siebes im Auffangbehälter zu erhalten, wurden drei Vorsprünge bzw. Ausnehmungen gewählt. Es können aber selbstverständlich auch mehrere miteinander korrespondierende Vorsprünge und Ausnehmungen vorhanden sein, wenn dies erforderlich ist.

Um möglichst schnell während des Betriebes von der Stellung "fein" nach "mittel" oder gar nach "grob" zu gelangen, ist in einer Weiterbildung der Erfindung vorgesehen, daß die in verschiedenen Höhen nebeneinander liegenden Ausnehmungen durch mehrere die Ausnehmungen verbindende Nutabschnitte verbunden sind und daß der Vorsprung in den Nutabschnitten entlanggleitet.

Ein Einsetzen des Siebes in den Auffangbehälter, ohne daß dabei die Vorsprünge hinderlich sind, wird dadurch erreicht, daß die Nut mit einer in Richtung der Höhenverstellung verlaufenden Nut verbunden ist, die sich von der Ausnehmung entfernt und die bis zum Rand des Siebes oder der Auffangschale verläuft. Diese Anordnung hat weiterhin den Vorteil, daß es nur in einer bestimmten Stellung - nämlich wenn die parallel zur Antriebsachse bzw. parallel zur Höhenverstellung des Siebes verlaufenden Nuten auf gleicher Höhe liegen wie die Ausnehmungen - möglich ist, das Sieb aus der Auffangschale zu entfernen. In allen anderen Stellungen ist das Sieb in der Auffangschale aufgrund der im wesentlichen quer verlaufenden, die einzelnen Ausnehmungen miteinander verbindenden Nuten gefesselt.

In einem zweiten Ausführungsbeispiel bezüglich der Anordnung der Verstelleinrichtung ist es nach der Erfindung vorgesehen, daß die Höhenverstellung zwischen dem Preßkegel und der Antriebswelle erfolgt. Dies läßt sich dadurch bewerkstelligen, daß die Antriebswelle des Elektromotors bzw. die Abtriebswelle des Preßkegels in ihrer Länge veränderbar ist. Die Längenveränderung kann beispielsweise dadurch erfolgen, daß Distanzelemente zwischen dem Ende der Antriebswelle und dem Auflager der Abtriebswelle des Preßkegels gelegt werden. Es ist aber auch denkbar, den Elektromotor mitsamt der Antriebswelle im Gehäuse der Zitruspresse abzusenken.

Nach einer dritten Ausführungsform der Anordnung der Verstelleinrichtung nach der Erfindung liegt das Sieb auf der Auffangschale auf und die Höhenverstelleinrichtung ist zwischen der Auffangschale und einem die Auffangschale tragenden bzw. die Antriebseinheit aufnehmenden Motorgehäuse ausgebildet. Bei dieser Ausführungsform wird also die Auffangschale mit dem Sieb gegenüber dem Preßkegel bei ihrer Verdrehung höhenverstellt, so daß sich die Auffangschale von dem Motorgehäuse abhebt bzw. absenkt. Dabei besteht die Höhenverstelleinrichtung aus mindestens drei am Umfang der Auffangschale oder des Motorgehäuses verteilten Vorsprüngen, die in am Umfang des Motorgehäusese oder an der Auffangschale ausgebildete Ausnehmungen eingreifen, wobei die Ausnehmungen von Abschnitten eines Gewindeganges gleicher Steigung gebildet werden.

Um eine stufen- bzw. schrittweise Einstellung des Ringspaltes zu ermöglichen, wobei die einzelnen Schritte möglichst klein sein sollen, ist in einer Weiterbildung der Erfindung vorgesehen, daß am Motorgehäuse eine Feder befestigt ist, die zur Bildung einer Rasteinrichtung in an der Auffangschale ausgebildete Rastelemente einrastet. Die Rasteinrichtung bzw. Ratsche hat weiterhin den Vorteil, daß eine Bedienungsperson eine bestimmte Ringspaltgröße auf genaue schnelle Weise einstellen kann, ohne daß sie dabei auf bestimmte Einstellwinkel achten muß.

Nach einer zweiten Ausführungsform der Erfindung ist vorgesehen, daß, das Sieb an seinem Außenumfang von der Innenwandung der Auffangschale begrenzt ist, daß der Grenzbereich zwischen dem Sieb und der Innenwandung der Auffangschale als Ringspalt ausgebildet ist, daß der Ringspalt in seinem Querschnitt veränderbar ist und daß zum Zwecke der Querschnittsveränderung das Sieb gegenüber der Auffangschale höhenverstellbar ist, wobei sich im Bereich der Querschnittsveränderung des Ringspaltes die Innenfläche der Auffangschale in radialer Richtung verändert. Bei dieser Ausführungsform wird also der Ringspalt zwischen der Auffangschale und dem Sieb gebildet. Dabei ist zur Höhenverstellung des Siebes gegenüber der Auffangschale ebenfalls eine Höhenverstelleinrichtung vorgesehen, die entsprechend einer bereits oben erwähnten Höhenverstelleinrichtung ausgebildet sein kann. Bei dieser zweiten Erfindung wird ein Ringspalt mit einer wesentlich größeren Ringfläche gebildet, da der Ringspalt an der Innenfläche des Auffangbehälters und dem Außenrand des Siebes ausgebildet ist. Dabei ist die Innenfläche der Auffangschale zumindest im Bereich der Querschnittsveränderung des Ringspaltes als konische oder stufenförmige Ringfläche ausgebildet.

Stützt sich das Sieb am Auffangbehälter ab, so ist es vorteilhaft, wenn die Höhenverstelleinrichtung aus einer zwischen dem Sieb und der Auffangschale ausgebildeten Gewindeeinrichtung besteht. Stützt sich hingegen das Sieb am Preßkegel ab, so ist die Höhenverstelleinrichtung zwischen dem Preßkegel und dem Motorgehäuse ausgebildet, wobei sich das Sieb dann am Preßkegel gleitend abstützt. Anstelle des Gewindes kann selbstverständlich auch eine das Sieb bzw. die Auffangschale in verschiedenen Höhenlagen fixierende Rasteinrichtung verwendet werden.

Damit der Trester und der Saft stets zum Ringspalt fließen, wird in einer Weiterbildung beider Erfindungen vorgeschlagen, daß das Sieb zum Ringspalt hin abfällt.

Dadurch, daß die Durchlässe nahe dem Ringspalt am Sieb ausgebildet sind, fließt der Saft nur über diese Durchlässe und zusätzlich über den Ringspalt. Bei nahezu geschlossenem Ringspalt kann also der Saft sowie Tresteranteile nur über die Durchlässe in den Auffangbehälter abfließen. Diese Anordnung ist auf beide Erfindungen anwendbar.

Um eine noch bcssere Querschnittsanpassung zwischen dem Ringspalt und den Durchlässen zu erreichen, wird weiterhin für beide Erfindungen vorgeschlagen, daß ein größerer Teil der Durchlässe zum Ringspalt hin offen ist. Eine noch optimalere Festlegung, was an Tresterteilen in den Auffangbehälter geschleust werden soll, wird dadurch erreicht, daß alle Durchlässe in den Ringspalt münden.

Dies hat auch noch den erheblichen Vorteil, daß eine besonders leichte Reinigung des Siebes möglich wird, da beim Reinigen alle Tresterteile aus den offenen Durchlässen herausgebürstet bzw. herausgewaschen werden können.

Um die Menge des Tresteranteils im Saft besonders fein dosieren zu können, sind die Durchlässe ausschließlich nur in der Nähe des Ringspalts am Sieb ausgebildet, wobei der übrige, zur Auffangschale verlaufende Ringbereich des Siebes im wesentlichen keine Durchlässe aufweist. Hierdurch wird also gewährleistet, daß zwar der gesamte Saft, aber nur eine bestimmte Größe und Menge an Tresteranteilen den vom Ringspalt und den Durchlässen gebildeten offnungsauerschnitt passieren.

Nach einer dritten Ausführungsform der Erfindung werden die Öffnungen durch Durchlässe des Siebes gebildet, deren Durchlaßquerschnitt dadurch vergrößert wird, daß eine ihre Querschnitte verkleinernde Abdeckung ganz oder teilweise entfernt wird. Gegenüber den vorhergehenden Beispielen wird zur Einstellung der Ringspaltgröße keine Höhenverstellung an den einzelnen Bauteilen vorgenommen, sondern die Querschnitte der einzelnen Siebdurchlässe werden durch eine Abdeckung vergrößert bzw. verkleinert. Die Veränderung des Durchlaßquerschnittes wird also mittels einer Schiebesitzventileinrichtung gelöst.

Besonders einfach läßt sich dieses Prinzip dadurch verwirklichen, daß die Abdeckung von einer drehbaren Scheibe gebildet wird, daß die Scheibe an derselben Stelle wie das Sieb die Durchlässe aufweist und daß die Scheibe gegenüber dem Sieb zentriert ist. Sind die einzelnen Siebdurchlässe auf dem Sieb und der drehbaren Scheibe genügend weit voneinander entfernt, so kann die Siebdurchlässigkeit von Saft und Tresteranteilen gänzlich unterbunden werden. Sowohl das Sieb wie die drehbare Scheibe lassen sich besonders einfach herstellen, da die auf beiden Teilen ausgebildeten Durchlässe in ihrer Größe und in ihrer Lage zum Sieb bzw. zur drehbaren Scheibe identisch sein können.

Um die drehbare Scheibe am Sieb zentrieren zu können, kann beispielsweise die drehbare Scheibe auf einem am Sieb ausgebildeten Zapfen aufgeklipst werden.

Sind beispielsweise die Durchlässe am Sieb in radialer Richtung hintereinander und auf einzelnen Segmenten angeordnet, so kann die Abdeckung auch von Streifen gebildet werden.

Mehrere Ausführungsbeispiele der Erfindung sind in der Zeichnung dargestellt und werden im folgenden näher erläutert. Es zeigen:
- Fig. 1: Teillängsschnitt durch den oberen Bereich einer in Ausschaltstellung befindlichen, elektrisch angetriebenen Zitruspresse nach der Erfindung, bei der das Sieb gegenüber der Auffangschale höhenverstellbar ist,
- Fig. 2: Draufsicht auf die Zitruspresse nach Fig. 1,
- Fig. 3: Draufsicht auf das in Fig. 1 und 2 dargestellte Sieb, jedoch ohne Preßkegel und Motorgehäuse,
- Fig. 4: Schnitt durch das Sieb gemäß der Schnittführung IV-IV in Fig. 3,
- Fig. 5: Teillängsschnitt durch die Zitruspresse nach der Schnittführung V-V in Fig. 1, lediglich im Bereich einer der drei Verstelleinrichtungen,
- Fig. 6: Teillängsschnitt durch den Preßkegel und das Sieb, wobei der Ringspalt nach der Erfindung seine geringste Breite aufweist,
- Fig. 7: gleiche Schnittführung wie in Fig. 6, jedoch hat hier der Ringspalt nach der Erfindung seinen größten Querschnitt erreicht, was der in Fig. 5 dargestellten Stellung des Siebes entspricht.
- Fig. 8: Längsschnitt durch ein zweites Ausführungsbeispiel einer Zitruspresse nach der ersten Erfindung, bei der das Sieb auf der Auffangschale aufliegt und bei der die Auffangschale mit dem Sieb gegenüber dem Preßkegel höhenverstellbar ist und
- Fig. 9: Längsschnitt durch eine Zitruspresse nach einer zweiten Erfindung, jedoch ohne Motorgehäuse, bei der der Ringspalt zwischen dem Innenrand der Auffangschale und dem Außenrand des Siebes ausgebildet ist.

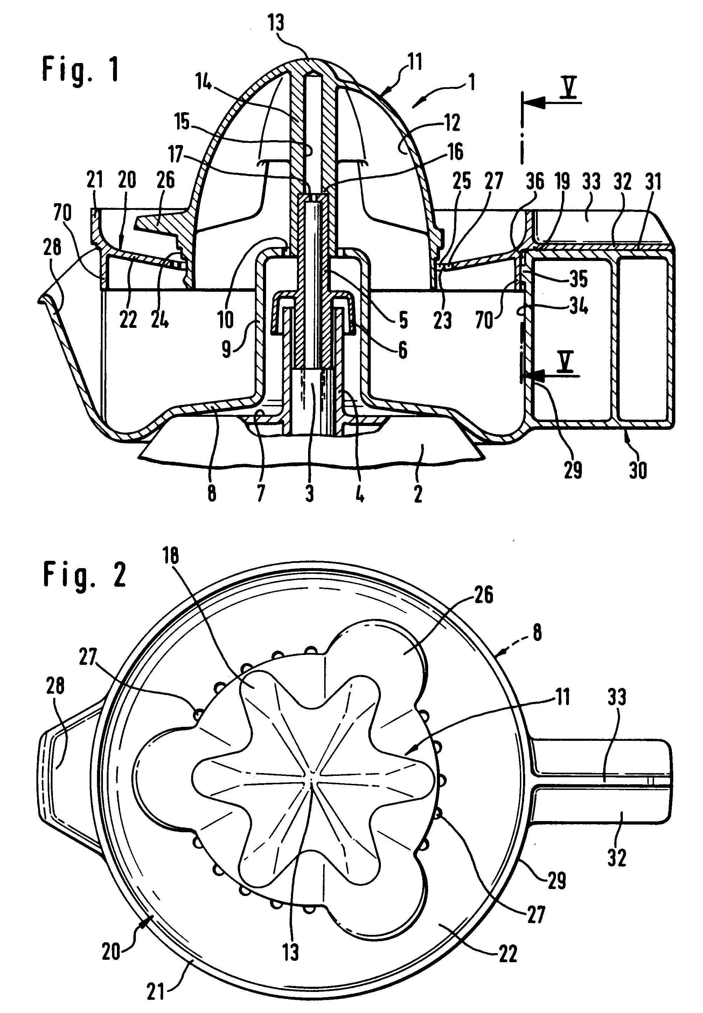

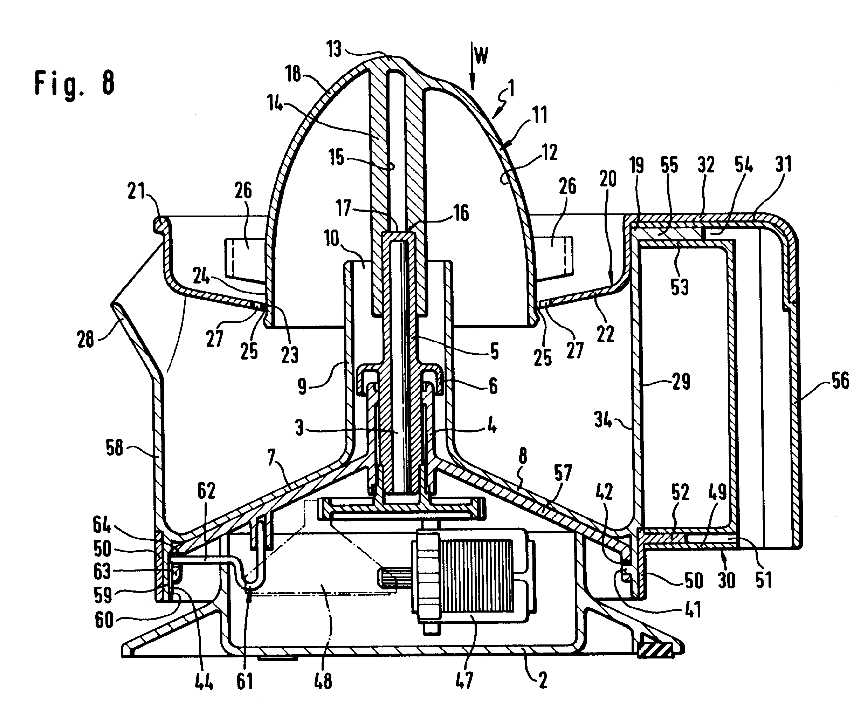

In Fig. 1 ist nur der obere Teil der Zitruspresse 1 darstellt, während in Fig. 8 eine komplette Zitruspresse dargestellt ist. Die Zitruspresse 1 besteht aus einem als Sockel ausgebildeten Gehäuse 2, in dem ein in Fig. 8 dargestellter, horizontal verlaufender Elektromotor 47 ausgebildet ist. Der Elektromotor 47 ist über ein zahnradgetriebe 48 mit einer Antriebswelle 3 verbunden. Die Antriebswelle 3 durchdringt nach den Fign. 1 und 8 das Gehäuse 2 über einen zylinderförmigen Schaft 4 in der Zeichnung nach oben. Der Endbereich der Antriebswelle 3 ist mit einem im Querschnitt als Sechskant ausgebildeten Kunststoffmantel 5 umspritzt und weist im Bereich des freien Endes des Schaftes 4 einen nach unten gerichteten, glockenförmigen Schirm 6 auf, der zum einen dazu dient, daß kein grober Schmutz oder gar Schwallwasser über den Schaft 4 in das Motorgehäuse 2 gelangt und der zum anderen bei axialer Verschiebung in Richtung W zum Einschalten des Elektromotors 47 als Abstützung des Kunststoffmantels 5 auf dem Schaft 4 und somit als Abstützung des Preßkegels 11 dient.

Auf der nach den Fign. 1 und 8 dargestellten Oberseite 7 des Gehäuses 2 wird eine Auffangschale 8 abgestützt und zentriert. Die Auffangschale 8 weist einen den Schaft 4 und die Antriebswelle 3 umgebenden, zylinderförmigen Da 9 auf, der dazu dient, daß der in die Auffangschale 8 eintretende Saft einen verhältnismäßig hohen Füllstand in der Auffangschale 8 erreichen kann und dennoch kein Saft über die Öffnung 10 nach außen dringt.

Auf den mit der Antriebswelle 3 formschlüssig verbundenen Kunststoffmantel 5 ist nach den Fign. 1 und 8 von oben her ein Preßkegel 11 aufgesetzt, der eine zur Auffangschale 8 offene, glockenförmige Aushöhlung 12 aufweist. Von der Spitze 13 der Aushöhlung 12 ragt eine hülsenförmige Abtriebswelle 14 nach unten in die Aushöhlung 12 hinein, deren ebenfalls als Sechskant ausgebildete Bohrung nahezu spiel frei den Kunststoffmantel 5 der Antriebswelle 3 umgibt. In der Bohrung 15 ist eine Stufe 16 ausgebildet, die sich an der Stirnfläche 17 am Ende des Kunststoffmantels 5 der Antriebswelle 3 abstützt.

Der Preßkegel 11 stützt sich auch dann, wenn von oben eine Zitrusfrucht auf den Preßkegel 11 gedrückt wird, über den Kunststoffmantel 5 und den Schirm 6 am Ende des Schaftes 4, der Teil des Gehäuses 2 der Zitruspresse ist, in axialer Richtung.

Am Preßkegel 11 sind nach Fig. 2 hervorstehende Rippen ausgebildet, wie sie bereits seit langem von anderen Zitruspressen - gleichgültig, ob sie nun mechanisch oder elektrisch bedienbar sind - bekannt sind. Auf dem Rand 19 der Auffangschale 8 ist nach Fig. 8 ein im wesentlichen ringförmiges Sieb 20 aufgesetzt, das einen am Rand nach oben gerichteten Ringbund 21 aufweist. In Fig. 1 ist das Sieb 20 in die Auffangschale 8 eingesetzt und stützt sich über ihre Ausnehmungen 36 an Vorsprüngen 35 der Auffangschale 8 ab. Der Boden 22 des Siebes 20 ist in den Fign. 1 und 8 im wesentlichen ringförmig ausgebildet und verläuft leicht konisch nach unten zum Preßkegel 11 hin. Dies dient dazu, daß der vom Preßkegel 11 ablaufende und auf den Boden 22 fallende Saft mitsamt dem Trester stets zum Preßkegel 11 hinbewegt wird.

Der Boden 22 des Siebes 20 weist nach den Fign. 1 bis 8 einen kreisförmigen Rand 23 auf, der in geringem Abstand zur Mantelfläche 24 des Preßkegels 11 verläuft, die in diesem Bereich sich konisch nach unten oder nach oben erweitert. Hierdurch wird zwischen diesen Teilen ein Ringspalt 25 gebildet, durch den je nach seiner Größe infolge des Anhebens oder des Absenkens des Siebes 20 gegenüber der konischen Fläche 24 bestimmt wird, welche Tresterpartikelchen, ob groß oder klein, in die Auffangschale 8 übertreten können.

An den Rand 23 des Siebes 20 schließen sich nach Fig. 1 bis 4 und 6 bis 8 radial nach außen verlaufende Durchlässe 27 an, die zur einfachen Reinigung des Siebes 20 und der Durchlässe 27 zum Ringspalt 25 hin offen sind. Geringfügig oberhalb der Mantelfläche 24 sind am Preßkegel 11 radial hervorspringende Abstreifer 26 angeformt, die im wesentlichen die Aufgabe haben, kleinere Tresterstücke durch die Durchlässe 27 durchzudrücken, so daß die Durchlässe 27 im wesentlichen frei von allzu groben Tresterrückständen gehalten werden. Dies erfolgt dadurch, daß beim Drehen des Preßkegels 11 die allzu groben Tresterrückstände, die nicht durch die Durchlässe gelangen, von den Abstreifern 26 radial nach außen geschoben werden und dort liegen bleiben. Diese Tresterteile werden also in der Regel nicht dem Saft zugeführt.

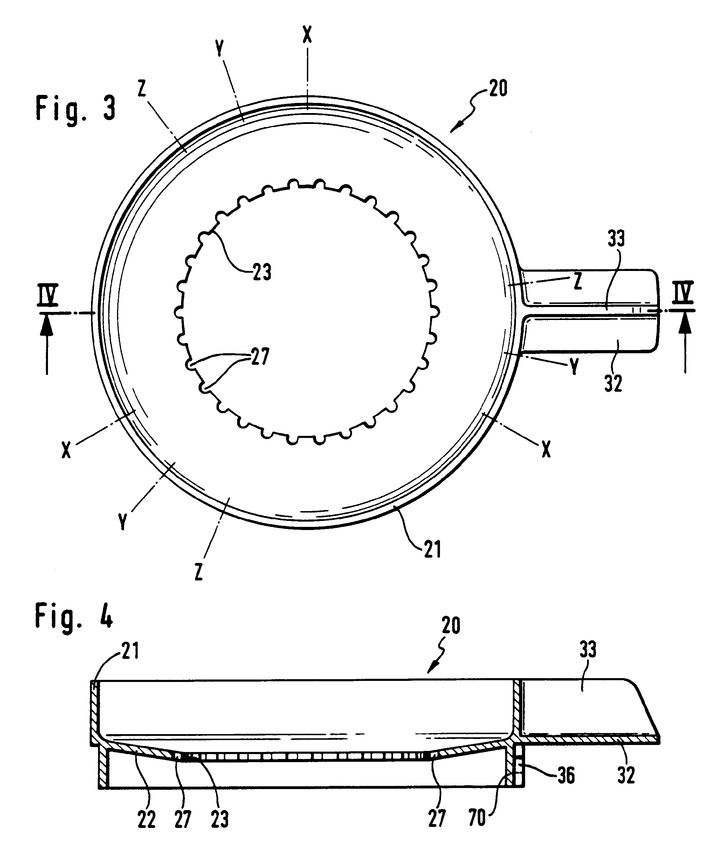

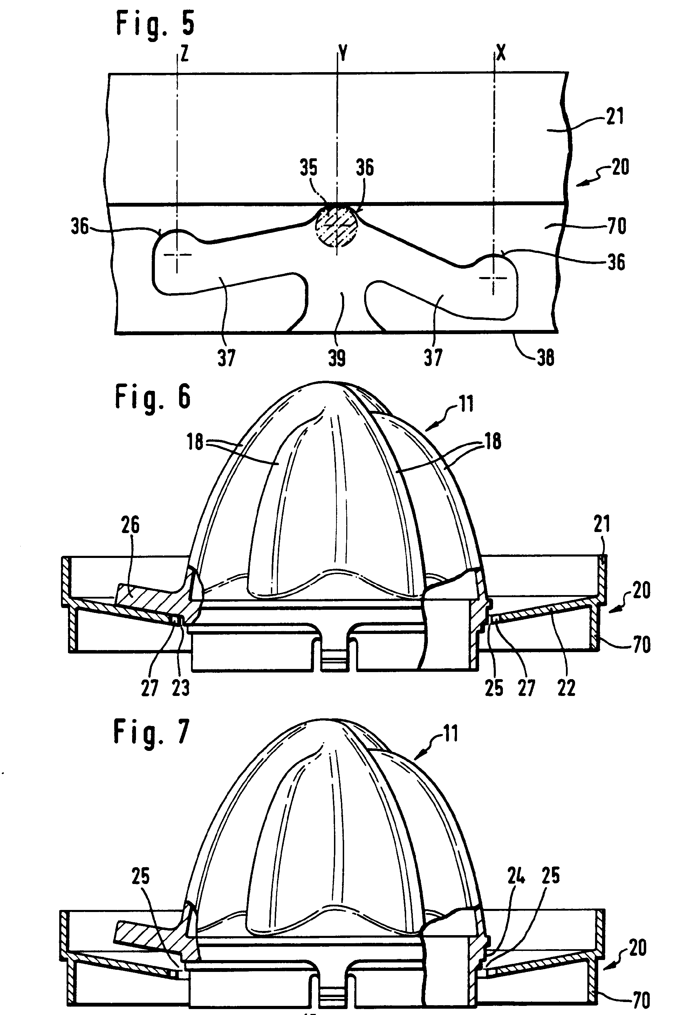

Die Auffangschale 8 weist nach Fig. 1, 2 und 8 eine Ausgießtülle 28 auf, die zur Entnahme des Saftes dient. Auf der gegenüberliegenden Seite ist nach Fig. 1 an der zylindrischen Mantelfläche 29 ein Handgriff 30 angeformt, auf dessen Oberseite 31 ein sich vom Sieb 20 radial nach außen und an die Oberseite des Handgriffs 30 angepaßtes Griffstück 32 erstreckt, dessen in der Mitte verlaufender Steg 33 zum Herausnehmen des Siebes 20 aus der Auffangschale 8 dient. An der dem Boden 22 des Siebes 20 zugewandten Innenwandung 24 steht ein im Querschnitt zylindrischer Vorsprung 35 hervor, der in eine Ausnehmung 36 des Siebes 20 eingreift, wie dies die Fig. 1 und 5 darstellen. Die Ausnehmung 36 ist nach den Fign. 1 und 4 an dem den Boden 22 nach unten begrenzenden Ringbund 70 ausgebildet.

In Fig. 8 ist auf der gegenüberliegenden Seite der Ausgießtülle 28 an der Auffangschale 8 der Handgriff 30 im Gegensatz zu Fig. 1 montiert, indem ein am unteren Bügel 49 des Handgriffs 30 angeschweißter oder angeklebter Ring 50 die untere Ringstufe 59 der Auffangschale 8 spiel frei umgibt. Die Verbindung an der Schweißstelle wird über einen vom Ring 50 in eine Ausnehmung 51 des Bügels 49 eingreifenden Steg 52 gebildet. Am oberen Bügel 53 des Handgriffs 30 ist in Fig. 8 ebenfalls ein Schlitz 54 ausgebildet, in den ein am oberen Rand 19 der Auffangschale 8 radial nach außen verlaufender Steg 55 eingreift und der mit dem Bügel 53 ultraschallverschweißt oder verklebt ist. Somit ist der Handgriff 30 fest mit der Auffangschale 8 verbunden. An der Oberseite 31 des oberen Bügels 53 liegt ein mit dem Sieb 20 verbundenes Griffstück 32 auf, das in das Mittelstück 56 des Handgriffs 30 übergeht.

In Fig. 8 bildet die Oberseite 7 des Gehäuses 2 einen Kegel der nach unten sich erweitert. Dieser Form ist der Boden 57 der Auffangschale 8 angepaßt und liegt auf der Oberseite 7 auf. Am radial äußeren Ende des Boden 57 schließt sich an die Zylinderwand 58 die Ringstufe 59 an, die an ihrer Innenwandung 60 von unten nach oben verlaufende Rastelemente 44 in Form von Nuten aufweist. In eines dieser Rastelemente 44 greift zur Bildung einer Rasteinrichtung oder Ratsche ein Arm 62 einer im Gehäuse 2 befestigten Feder 61 quer ein, wobei der Arm 62 einen am radial äußeren Ende des Kegels 7 angeformten Ringbund 63 über ein Durchgangsloch 64 nach außen durchdringt. Zu besseren Ratschwirkung können auch mehrere derartige Federn 61 mit Nuten 44 in diesem Bereich am Umfang der Ringstufe 59 ausgebildet sein.

Wie aus den Fig. 3 und 5 ersichtlich wird, ist die Ausnehmung 36 zur Höhenverstellung des Siebes 20 gegenüber der Auffangschale 8 und dem Preßkegel 11 mit drei Raststellungen X, Y, Z dreimal im Abstand von 120° am Umfang des Ringbundes 21 ausgebildet, damit das Sieb 20 stets stabil in der Auffangschale 8 gelagert ist. Wie aus Fig. 5 deutlich wird, ist die hier angezeigte Position Y des Siebes 20 die Stellung, die den größten Ringspalt 25 ergibt. In dieser Stellung liegt nämlich der Rand 23 am weitesten der Mantelfläche 24 gegenüber, d.h., der Rand 23 umgibt die Mantelfläche 24 nicht (Fig. 1). Die Position Z definiert die Mittelstellung. In der Position X ist die Minimalstellung erreicht, in der nur kleine Tresterstücke in die Auffangschale 8 gelangen können.

Die Ausnehmungen 36 sind nach Fig. 5 über Nuten 37 miteinander verbunden. Dabei sind die Nuten 37 so breit bemessen, daß jeweils ein Vorsprung 35 in ihnen gleiten kann. Vom unteren Rand 38 des Ringbundes 21 verläuft nach Fig. 5 senkrecht nach oben eine weitere Nut 39. Diese dient dazu, daß der Vorsprung 35 überhaupt erst in die Nuten 37 eindringen kann.

In Fig. 6 wird nochmals die Stellung mit dem geringsten Ringspalt 25 gezeigt, also die Stellung X.

In Fig. 7 wird die Stellung mit dem größten Ringspalt 25 gezeigt, also die Stellung Y.

In Fig. 8 besteht die Höhenverstelleinrichtung aus drei am Außenumfang des Ringbundes 63 gleichmäßig verteilten Ausnehmungen 42 in Form von Gewindegängen oder Stufen in die jeweils ein an der Innenfläche der Ringstufe 59 des Auffanggefäßes 8 hervorstehender Vorsprung 41 eingreift. Die Ausnehmungen 42 in Fig. 8 können selbstverständlich auch so wie die Ausnehmungen 36 in Fig. 5 ausgebildet sein, wobei sie mit einer senkrecht verlaufenden Einlaß nut 39 zur Aufnahme der Vorsprünge 35 bzw. 41 versehen sind. Beim Aufsetzen der Auffangschale 8 auf dem Motorgehäuse 2 muß diese also nach Fig. 8 immer so gegenüber den Vorsprüngen 41 ausgerichtet sein, daß die Vorsprünge 41 in die Einlaßnuten 39 eingreifen können. Dies gilt auch für den Federarm 62, der dabei in eine Nut 44 eingreift. Zentriert wird die Auffangschale 8 über die Ringstufe 59 am Ringbund 63 des Motorgehäuses 2.

Zur Vermeidung von Wiederholungen wurden in den Fig. 1 bis 8 für entsprechend gleiche Bauteile gleiche Bezugszeichen verwendet.

Die Wirkungsweise der erfindungsgemäßen Zitruspresse nach den Fign. 1 bis 8 ist folgende:

Nachdem alle Teile - wie Auffangschale 8, Sieb 20 und Preßkegel 11 - gemäß den Fign.1 und 8 von oben her auf das Gehäuse 2 aufgesetzt sind, wird zunächst festgelegt, welche Mengen an Trester man im Saft haben möchte. Wird beispielsweise nahezu reiner Saft verlangt, so wählt man durch Drehen des Siebes 20 gemäß den Fign. 1 und 5 oder gemäß Fig. 8 durch Drehen der Auffangschale 8 nach links die Position X (in Fig. 8 nicht dargestellt), um den geringsten Ringspalt 25 zu erhalten.

Nun wird eine Fruchthälfte, beispielsweise eine Zitrone oder Apfelsine, gegen den Preßkegel 11 gedrückt. Die dabei auf den Kunststoffmantel 5 und die Antriebswelle 3 einwirkende, nach den Fign. 1 und 8 nach unten gerichtete Andrückkraft läßt die Antriebswelle 3 mit dem Kunststoffmantel 5 geringfügig nach unten verschieben, wodurch ein in den Zeichnungen nicht dargestellter Schalter und der Elektromotor 47 in seine Einschaltstellungen gelangen, so der Preßkegel 11 zu drehen beginnt.

Dabei stützt sich der Preßkegel 11 nach den Fign. 1 und 8 (diese Betriebsstellung ist aber nicht dargestellt) über den Schirm 6 am Ende des Schaftes 4 ab. Ein Einschalten der Zitruspresse wäre auch durch einen von Hand betätigbaren Schalter denkbar.

Der im Betrieb des Preßkegels 11 von den Rippen 18 ausgepreßte Saft und die dabei von den Rippen 18 abgequetschten Fruchtteile gelangen auf den Boden 22 des Siebes 20. Während der Saft und die kleinstückigen Tresteranteile sofort über das Sieb 20 in die Auffangschale 8 abtropfen, fließen die größeren Trester- bzw. Fruchtanteile, die nicht die Durchlässe 27 des Siebes 20 passieren können, nach innen zum Preßkegel 11 oder sie fließen bei Vorhandensein eines Abstreifers 26 nach außen. Je nach Größe des Ringspaltes 25, dessen Einstellung über die Höhenverstelleinrichtung 35, 36, 37 erfolgt, können also nach der Erfindung entweder nur kleinere oder auch größere Tresteranteile den Ringspalt 25 passieren.

Wie aus Fig. 6 ersichtlich ist, beträgt bei der Feineinstellung des Siebes 20 gegenüber dem Preßkegel 11 der Abstand der Abstreifer 26 zum Boden 22 des Siebes 20 nahezu 0 Millimeter, während in Fig. 7 dieser Abstand ungefähr 5 Millimeter ausmacht. Der Abstand der Abstreifer 26 zum Boden 22 des Siebes 20 dient also ebenfalls als wichtiges Kriterium für den Tresteranteil im Saft, wenn dieser oder diese am Preßkegel 11 ausgebildet sind.

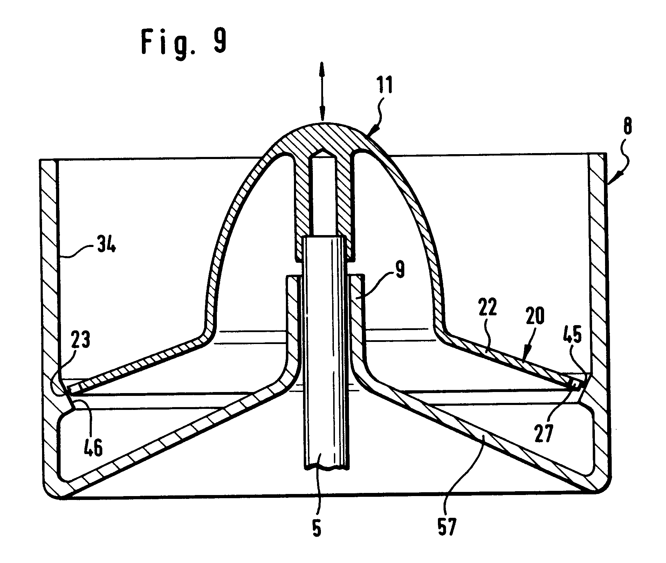

In Fig. 9 ist das Sieb 20 beispielsweise einteilig mit dem Preßkegel 11 verbunden. Der Preßkegel 11 ist drehfest mit dem Kunststoffmantel 5 der Antriebswelle verbunden und ist über eine zwischen dem Kunststoffmantel 5 und dem Preßkegel 11 ausgebildete Höhenverstelleinrichtung, die hier nicht näher dargestellt ist, mit dem Sieb 20 höhenverstellbar. An der Innenwandung 34 der Auffangschale 8 ist eine sich nach innen und nach unten verjüngende, konische Ringfläche 46 augebildet, der der radial äußere Rand 23 des Siebes 20 zur Bildung des Ringspaltes 45 gegenüber steht. Am Rand 23 sind nach außen hin offene Durchlässe 27 ausgebildet.

Der Boden 22 des Siebes 20 verläuft rundum abfallend zur Ringfläche 46 hin, damit der Saft und die Tresteranteile zum Ringspalt 45 fließen können. Bei Höhenverstellung des Preßkegels 11 mitsamt dem Sieb 20 verändert sich die Fläche des Ringspaltes 45 derart, daß je nach Einstellung verschieden große Tresteranteile den Ringspalt 45 passieren können.

## Patentansprüche

1. Zitruspresse zur Herstellung von Fruchtsaft mit einem durch eine Antriebswelle (3) motorisch angetriebenen Preßkegel (11), welcher rundum von einem mit Durchlässen (27) versehenen Sieb (20) umgeben ist, unter dem eine eine Innenwandung (34) aufweisende Auffangschale (8) für den Fruchtsaft angeordnet ist, wobei beim Auspressen einer Zitrusfrucht der Fruchtsaft die Durchlässe (27) des Siebes (20) passiert und das Fruchtfleisch weitgehend von den Durchlässen (27) des Siebes (20) zurückgehalten wird,
**dadurch gekennzeichnet,**
daß der Grenzbereich zwischen dem Preßkegel (11) und dem Sieb (20) als Ringspalt (25) ausgebildet ist, daß der Ringspalt (25) in seinem Querschnitt veränderbar ist, daß zum Zwecke der Querschnittsveränderung der Preßkegel (11) und/oder das Sieb (20) durch eine Höhenverstelleinrichtung gegeneinander höhenverstellbar sind und daß sich die Mantelfläche (24, 23) des Preßkegels (11) und/oder des Siebes (20) im Bereich der Querschnittsveränderung des Ringspaltes (25) in radialer Richtung verändert.

2. Zitruspresse nach Anspruch 1,
**dadurch gekennzeichnet**,
daß die Höhenverstelleinrichtung zwischen dem Sieb (20) und der Auffangschale (8) ausgebildet ist.

3. Zitruspresse nach Anspruch 2,
**dadurch gekennzeichnet,**
daß die Höhenverstelleinrichtung aus mindestens drei am Umfang des Siebes (20) oder der Auffangschale (8) verteilte Ausnehmungen (36) besteht, in die am Umfang verteilte Vorsprünge (35) einrastbar sind, und daß jeweils drei ein Gruppe bildende Vorsprünge (35) auf gleicher Höhe liegen, während alle weiteren Gruppen von Vorsprüngen (35), die die gleiche Teilung wie die Ausnehmungen (36) haben, auf einer anderen Höhe an der Auffangschale (8) oder am Sieb (20) ausgebildet sind.

4. Zitruspresse nach Anspruch 3,
**dadurch gekennzeichnet,**
daß die in verschiedenen Höhen nebeneinander liegenden Ausnehmungen (36) durch mehrere die Ausnehmungen (36) verbindende Nutabschnitte (37) verbunden sind und daß der Vorsprung (35) in den Nutabschnitten (37) entlanggleitet.

5. Zitruspresse nach Anspruch 4,
**dadurch gekennzeichnet,**
daß die Nut (37) mit einer in Richtung der Höhenverstellung verlaufenden Nut (39) verbunden ist, die sich von der Ausnehmung (36) entfernt und die bis zum Rand des Siebes (20) oder der Auffangschale (8) verläuft.

6. Zitruspresse nach Anspruch 5,
**dadurch gekennzeichnet,**
daß die Höhenverstelleinrichtung zwischen dem Preßkegel (11) und der Antriebswelle (3) ausgebildet ist.

7. Zitruspresse nach Anspruch 6,
**dadurch gekennzeichnet**,
daß die Antriebswelle (3) in ihrer Länge veränderbar ist.

8. Zitruspresse nach Anspruch 6,
**dadurch gekennzeichnet**,
daß die Abtriebswelle (14) des Preßkegels (11) in ihrer Länge veränderbar ist.

9. Zitruspresse nach Anspruch 1,
**dadurch gekennzeichnet,**
daß das Sieb (20) auf der Auffangschale (8) aufliegt und daß die Höhenverstelleinrichtung zwischen der Auffangschale (8) und einem die Antriebseinheit aufnehmenden Motorgehäuse (2) ausgebildet ist, an dem die Auffangschale (8) aufliegt.

10. Zitruspresse nach Anspruch 9,
**dadurch gekennzeichnet,**
daß die Höhenverstelleinrichtung aus mindestens drei am Umfang der Auffangschale (8) oder des Motorgehäuses (2) verteilten Vorsprüngen (41) besteht, daß die Vorsprünge (41) in am Umfang des Motorgehäuses (2) oder an der Auffangschale (8) ausgebildete Ausnehmungen (42) eingreifen und daß die Ausnehmungen (42) von Abschnitten eines Gewindeganges (43) gleicher Steigung gebildet werden.

11. Zitruspresse nach Anspruch 10,
**dadurch gekennzeichnet,**
daß am Motorgehäuse (2) eine Feder (61) befestigt ist, die zur Bildung einer Rasteinrichtung in an der Auffangschale (8) ausgebildete Rastelemente (44) einrastet.

12. Zitruspresse nach dem Oberbegriff des Anspruchs 1,
**dadurch gekennzeichnet**,
daß das Sieb (20) an seinem Außenumfang von der Innenwandung (34) der Auffangschale (8) begrenzt ist, daß der Grenzbereich zwischen dem Sieb (20) und der Innenwandung (34) der Auffangschale (8) als Ringspalt (45) ausgebildet ist, daß der Ringspalt (45) in seinem Querschnitt veränderbar ist, daß zum Zwecke der Querschnittsveränderung das Sieb (20) gegenüber der Auffangschale (8) höhenverstellbar ist und daß sich im Bereich der Querschnittsveränderung des Ringspaltes (45) die Innenfläche (34) der Auffangschale (8) in radialer Richtung verändert.

13. Zitruspresse nach Anspruch 12,
**dadurch gekennzeichnet,**
daß die Innenfläche (34) der Auffangschale (8) zumindest im Bereich der Querschnittsveränderung des Ringspaltes (45) als konische oder stufenförmige Ringfläche (46) ausgebildet ist.

14. Zitruspresse nach Anspruch 12,
**dadurch gekennzeichnet**,
daß zur Höhenverstellung des Siebes (20) gegenüber der Auffangschale (8) eine Höhenverstelleinrichtung vorgesehen ist.

15. Zitruspresse nach Anspruch 14,
**dadurch gekennzeichnet,**
daß die Höhenverstelleinrichtung aus einer zwischen dem Sieb (20) und der Auffangschale (8) augebildeten Gewindeeinrichtung besteht.

16. Zitruspresse nach Anspruch 14,
**dadurch gekennzeichnet**,
daß die Höhenverstelleinrichtung zwischen Preßkegel (11) und Motorgehäuse (2) ausgebildet ist und daß das Sieb (20) sich am Preßkegel (11) gleitend abstützt.

17. Zitruspresse nach Anspruch 1 oder 12,
**dadurch gekennzeichnet**,
daß das Sieb (20) zum Ringspalt (25, 45) hin abfällt.

18. Zitruspresse nach Anspruch 1 oder 12,
**dadurch gekennzeichnet**,
daß Durchlässe (27) nahe dem Ringspalt (25) am Sieb (20) ausgebildet sind.

19. Zitruspresse nach Anspruch 1 oder 12,
**dadurch gekennzeichnet**,
daß Durchlässe (27) zum Ringspalt (25) hin offen sind.

20. Zitruspresse nach Anspruch 1 oder 12,
**dadurch gekennzeichnet**,
daß alle Durchlässe (27) in den Ringspalt (25) münden.

21. Zitruspresse nach Anspruch 1 oder 12
**dadurch gekennzeichnet,**
daß die Durchlässe (27) ausschließlich nur in Nähe des Ringspaltes (25) am Sieb (20) ausgebildet sind und daß der übrige, zur Auffangschale (8) verlaufende Ringbereich des Siebes (20) im wesentlichen keine Durchlässe (27) aufweist.

22. Zitruspresse nach Anspruch 1
**dadurch gekennzeichnet,**
daß die Öffnungen durch Durchlässe (27) des Siebes (20) gebildet werden, deren Durchlaßquerschnitt dadurch vergrößert wird, daß eine ihre Querschnitte verkleinernde Abdeckung ganz oder teilweise entfernt wird.

23. Zitruspresse nach Anspruch 22
**dadurch gekennzeichnet,**
daß die Abdeckung von einer drehbaren Scheibe gebildet wird, daß die Scheibe an derselben Stelle wie das Sieb (20) die Durchlässe aufweist und daß die Scheibe gegenüber dem Sieb (20) zentriert ist.

24. Zitruspresse nach Anspruch 22
**dadurch gekennzeichnet,**
daß die Abdeckung von Streifen gebildet wird.

## Claims

1. A citrus juicer for producing fruit juice, including a cone (11) driven by a drive shaft (3) of a motor and surrounded on all sides by a strainer (20) provided with passageways (27) under which a bowl (8) having an inner wall (34) and collecting the fruit juice is disposed, with the juice of a citrus fruit passing through the passageways (27) of the strainer (20) as it is squeezed, while the pulp is largely retained by the passageways (27) of the strainer (20),
**characterized in that** the boundary area between the cone (11) and the strainer (20) is configured as an annular gap (25), that the annular gap (25) is of variable cross-section, that, for the purpose of varying the cross-section, the cone (11) and/or the strainer (20) are relatively vertically adjustable by a vertical adjusting device, and that the circumferential surface (24, 23) of the cone (11) and/or the strainer (20) varies in a radial direction in the area of the variation of the cross-section of the annular gap (25).

2. The citrus juicer as claimed in claim 1,
**characterized in that** the vertical adjusting device is provided intermediate the strainer (20) and the collecting bowl (8).

3. The citrus juicer as claimed in claim 2,
**characterized in that** the vertical adjusting device comprises at least three recesses (36) spaced on the periphery of the strainer (20) or the collecting bowl (8), for locking engagement with projections (35) spaced on the periphery, and that three projections (35) which combine to form a group are arranged at the same elevation, while all further groups of projections (35) with the same spacing as the recesses (36) are provided at another elevation on the collecting bowl (8) or on the strainer (20).

4. The citrus juicer as claimed in claim 3,
**characterized in that** the recesses (36) juxtaposed at various elevations are linked by several groove sections (37) connecting the recesses (36), and that the projection (35) engages in the groove sections (37) in a sliding relationship thereto.

5. The citrus juicer as claimed in claim 4,
**characterized in that** the groove (37) is connected with a groove (39) which extends in the direction of the vertical adjustment away from the recess (36) and up to the rim of the strainer (20) or the collecting bowl (8).

6. The citrus juicer as claimed in claim 5,
**characterized in that** the vertical adjusting device is provided between the cone (11) and the drive shaft (3).

7. The citrus juicer as claimed in claim 6,
**characterized in that** the drive shaft (3) is variable in length.

8. The citrus juicer as claimed in claim 6,
**characterized in that** the driven shaft (14) of the cone (11) is variable in length.

9. The citrus juicer as claimed in claim 1,
**characterized in that** the strainer (20) rests on the collecting bowl (8), and that the vertical adjusting device is provided between the collecting bowl (8) and a motor housing (2) which accommodates the drive unit and on which the collecting bowl (8) rests.

10. The citrus juicer as claimed in claim 9,
**characterized in that** the vertical adjusting device comprises at least three projections (41) spaced on the periphery of the collecting bowl (8) or the motor housing (2), that the projections (41) engage with recesses (42) provided on the periphery of the motor housing (2) or on the collecting bowl (8), and that the recesses (42) are formed by sections of a thread (43) of like lead.

11. The citrus juicer as claimed in claim 10,
**characterized in that** a spring (61) is secured to the motor housing (2), the spring locking into locking means (44) provided on the collecting bowl (8) to form a locking device.

12. The citrus juicer according to the preamble of claim 1,
**characterized in that** the strainer (20) has its outer periphery bounded by the inner wall (34) of the collecting bowl (8), that the boundary area between the strainer (20) and the inner wall (34) of the collecting bowl (8) is configured as an annular gap (45), that the annular gap (45) is variable in cross-section, that, for the purpose of varying the cross-section, the strainer (20) is vertically adjustable relative to the collecting bowl (8), and that the inner surface (34) of the collecting bowl (8) varies in a radial direction in the area of the variation of cross-section of the annular gap (45).

13. The citrus juicer as claimed in claim 12,
**characterized in that** the inner surface (34) of the collecting bowl (8) is configured as a conical or stepped annular surface (46) at least in the area of the variation of cross-section of the annular gap (45).

14. The citrus juicer as claimed in claim 12,
**characterized in that** a vertical adjusting device is provided for vertical adjustment of the strainer (20) relative to the collecting bowl (8).

15. The citrus juicer as claimed in claim 14,
**characterized in that** the vertical adjusting device comprises a thread means provided between the strainer (20) and the collecting bowl (8).

16. The citrus juicer as claimed in claim 14,
**characterized in that** the vertical adjusting device is provided between the cone (11) and the motor housing (2) and that the strainer (20) bears against the cone (11) in a sliding relationship thereto.

17. The citrus juicer as claimed in claim 1 or claim 12,
**characterized in that** the strainer (20) is inclined down towards the annular gap (25, 45).

18. The citrus juicer as claimed in claim 1 or claim 12,
**characterized in that** passageways (27) are provided close to the annular gap (25) on the strainer (20).

19. The citrus juicer as claimed in claim 1 or claim 12,
**characterized in that** passageways (27) are open towards the annular gap (25).

20. The citrus juicer as claimed in claim 1 or claim 12,
**characterized in that** all passageways (27) terminate into the annular gap (25).

21. The citrus juicer as claimed in claim 1 or claim 12,
**characterized in that** the passageways (27) are provided exclusively in the proximity of the annular gap (25) on the strainer (20) and that the remaining annular area of the strainer (20) which extends towards the collecting bowl (8) essentially has no passageways (27).

22. The citrus juicer as claimed in claim 1,
**characterized in that** the apertures are formed by passageways (27) in the strainer (20) whose cross-sections of passage are increased by removing wholly or in part a cover reducing their areas of cross-section.

23. The citrus juicer as claimed in claim 22,
**characterized in that** the cover is formed by a rotary disc, that the disc has passageways provided at the same locations as on the strainer (20), and that the disc is located centrally relative to the strainer (20).

24. The citrus juicer as claimed in claim 22,
**characterized in that** the cover is formed by strips.

## Revendications

1. Presse-agrumes pour faire du jus de fruit, possédant un cône de pressage (11) entraîné par moteur par l'intermédiaire d'un arbre menant (3) et entouré tout au autour d'un tamis (20) pourvu de passages (27) et sous lequel est placée une cuve (8) présentant une paroi intérieure (34) pour recueillir le jus, dans lequel, lors de l'extraction du jus d'un agrume, le jus traverse les passages (27) du tamis (20) et la pulpe du fruit est retenue dans une large mesure par le tamis (20), caractérisé en ce que la zone frontière entre le cône de pressage (11) et le tamis (20) est réalisée comme une fente annulaire (25), que la section de la fente annulaire (25) est variable, que le cône (11) et/ou le tamis (20) sont mutuellement réglables en hauteur par un dispositif de réglage en hauteur en vue de la variation de la section de la fente et que la surface latérale (24, 23) du cône (11) et/ou du tamis (20) change en direction radiale dans la zone où est produite la variation de section de la fente annulaire (25).

2. Presse-agrumes selon la revendication 1, caractérisé en ce que le dispositif de réglage en hauteur est réalisé entre le tamis (20) et la cuve (8).

3. Presse-agrumes selon la revendication 2, caractérisé en ce que le dispositif de réglage en hauteur comprend au moins trois évidements (36) répartis sur le pourtour du tamis (20) ou de la cuve (8) et dans lesquels peuvent venir s'encliqueter des saillies (35) réparties sur le pourtour, et que chaque fois trois saillies (35), formant un groupe, sont situées à la même hauteur, tandis que tous les autres groupes de saillies (35), ayant le même espacement que les évidements (36), sont formés à une hauteur différente sur la cuve (8) ou le tamis (20).

4. Presse-agrumes selon la revendication 3, caractérisé en ce que les évidements (36) situés les uns à côté des autres à des hauteurs différentes, sont reliés entre eux par des tronçons de rainure (37) et que la saillie (35) glisse dans les tronçons de rainure (37) et le long de ceux-ci.

5. Presse-agrumes selon la revendication 4, caractérisé en ce que la rainure (37) est reliée à une rainure (39) orientée suivant la direction du réglage en hauteur, qui s'éloigne de l'évidement (36) et s'étend jusqu'au bord du tamis (20) ou de la cuve (8).

6. Presse-agrumes selon la revendication 5, caractérisé en ce que le dispositif de réglage en hauteur est réalisé entre le cône de pressage (11) et l'arbre menant (3).

7. Presse-agrumes selon la revendication 6, caractérisé en ce que la longueur de l'arbre menant (3) est variable.

8. Presse-agrumes selon la revendication 8, caractérisé en ce que le cône de pressage (11) est pourvu d'un arbre mené (14) dont la longueur est variable.

9. Presse-agrumes selon la revendication 1, caractérisé en ce que le tamis (20) repose sur la cuve (8) et que le dispositif de réglage en hauteur est réalisé entre la cuve (8) et un carteur moteur (2) qui reçoit l'unité d'entraînement et sur lequel repose la cuve (8).

10. Presse-agrumes selon la revendication 9, caractérisé en ce que le dispositif de réglage en hauteur comprend au moins trois saillies (41) réparties sur le pourtour de la cuve (8) ou du carteur moteur (2), que les saillies (41) pénètrent dans des évidements (42) formés sur le pourtour du carter moteur (2) ou sur la cuve (8) et que les évidements (42) sont formés par des portions d'une spire de filet (43) à pas constant.

11. Presse-agrumes selon la revendication 10, caractérisé en ce qu'un ressort (61) est fixé au carter moteur (2) et agencé, en vue de la formation d'un dispositif d'arrêt, pour s'encliqueter dans des éléments d'arrêt (44) formés sur la cuve (8).

12. Presse-agrumes selon le préambule de la revendication 1, caractérisé en ce que la paroi intérieure (34) de la cuve (8) délimite le tamis (20) à son pourtour extérieur, que la zone frontière entre le tamis (20) et la paroi intérieure (34) de la cuve (8) est réalisée comme une fente annulaire (45), que la section de la fente annulaire (45) est variable, que le tamis (20) est réglable en hauteur par rapport à la cuve (8) pour la variation de la section de la fente et que la surface intérieure (34) de la cuve (8) change en direction radiale dans la zone où est produite la variation de section de la fente annulaire (45).

13. Presse-agrumes selon la revendication 12, caractérisé en ce que la surface intérieure (34) de la cuve (8) est réalisée, tout au moins dans la zone où est produite la variation de section de la fente annulaire (45), comme une surface annulaire (46) de forme conique ou pourvue de gradins.

14. Presse-agrumes selon la revendication 12, caractérisé en ce qu'un dispositif de réglage en hauteur est prévu pour déplacer le tamis (20) en hauteur par rapport à la cuve (8).

15. Presse-agrumes selon la revendication 14, caractérisé en ce que le dispositif de réglage en hauteur est formé d'un dispositif fileté réalisé entre le tamis (20) et la cuve (8).

16. Presse-agrumes selon la revendication 14, caractérisé en ce que le dispositif de réglage en hauteur est réalisé entre le cône de pressage (11) et le carter moteur (2) et que le tamis (20) s'appuie à glissement sur le cône (11).

17. Presse-agrumes selon la revendication 1 ou 12, caractérisé en ce que le tamis (20) descend vers la fente annulaire (25, 45).

18. Presse-agrumes selon la revendication 1 ou 12, caractérisé en ce que des passages (27) sont formés dans le tamis (20) près de la fente annulaire (25).

19. Presse-agrumes selon la revendication 1 ou 12, caractérisé en ce que certains passages (27) s'ouvrent vers la fente annulaire (25).

20. Presse-agrumes selon la revendication 1 ou 12, caractérisé en ce que tous les passages (27) débouchent dans la fente annulaire (25).

21. Presse-agrumes selon la revendication 1 ou 12, caractérisé en ce que les passages (27) sont formés exclusivement près de la fente annulaire (25) dans le tamis (20) et que la partie annulaire restante du tamis (20), s'étendant vers la cuve (8), ne présente pratiquement pas de passages (27).

22. Presse-agrumes selon la revendication 1, caractérisé en ce que les passages (27) du tamis (20) forment des ouvertures dont la section d'écoulement peut être agrandie par l'enlèvement complet ou partiel d'un recouvrement réduisant la section de ces ouvertures.

23. Presse-agrumes selon la revendication 22, caractérisé en ce que le recouvrement est formé par un disque rotatif, que ce disque présente des passages au mêmes endroits que le tamis (20) et que le disque est centré par rapport au tamis (20).

24. Presse-agrumes selon la revendication 22, caractérisé en ce que le recouvrement est formé par des bandes.
